# DEMANDE DE BREVET EUROPEEN

(11) **EP 0 951 845 A1**
(43) Date de publication de la demande: **27.10.1999**
(21) Numéro de dépôt: 99400988.4
(22) Date de dépôt: 22.04.1999
(51) Int. Cl.: A23P 1/08, A21D 13/00, A23G 9/02, A21D 13/08

(54) **Produit alimentaire et procédé de fabrication d'un tel produit**

(30) Priorité: 24.04.1998 FR 9805195
(71) Demandeur: Berry-Good, 36130 Deols (FR)
(72) Inventeur: Chene, Francis, 36000 Chateauroux (FR)
(74) Mandataire: Debay, Yves

(57) **Abrégé**

La présente invention concerne un produit alimentaire et son procédé de fabrication.

Ce produit alimentaire est caractérisé en ce qu'il est constitué d'une boule de garniture enrobée d'une pâte cuite, l'ensemble étant passé à l'anglaise puis dans une chapelure avant d'être mis dans un surgélateur.

## Description

La présente invention concerne un produit alimentaire et son procédé de fabrication, notamment pur un dessert ou un entremet.

Il est connu dans les desserts chauds-froids, tels que, par exemple, les omelettes norvégiennes, d'enrober la glace d'une couche meringuée, de façon à isoler celle-ci pendant le court passage au four et pendant le temps nécessaire, à flamber l'omelette avec de l'alcool. Toutefois, ce procédé ne permet pas de donner à l'omelette un côté croustillant.

Il est également connu des pains briochés fourrés avec une saucisse. En général, la saucisse est cuite en même temps que le pain de mie dans le four. Toutefois, ceci ne permet pas d'obtenir un plat croustillant et rapidement préparable tout en permettant une longue conservation.

Un but de l'invention est de proposer un produit alimentaire dont l'enveloppe extérieure est servie chaude tout en conservant son croquant.

Ce but est atteint par le fait que le produit alimentaire est constitué d'une boule de garniture enrobée d'une pâte cuite, l'ensemble étant passé à l'anglaise puis dans une chapelure avant d'être mis dans un surgélateur.

Selon une autre particularité, la pâte cuite est de type brioche ou pain de mie.

Selon une autre particularité, le produit alimentaire est constitué d'une boule de garniture enrobée d'une pâte cuite, l'ensemble étant passé à l'anglaise, puis dans une chapelure avant d'être mis dans un surgélateur, le dessert sorti de l'emballage, est mis à frire pendant 30 secondes à 180° dans de l'huile d'arachide et servi accompagné d'un nappage.

Selon une autre particularité, le produit alimentaire est constitué d'une boule de garniture enrobée d'une pâte cuite, étant passé à l'anglaise puis dans une chapelure, frit pendant 30 secondes à 180° dans de l'huile, surgelé, mis en boîte et congelé pour, lors de son utilisation, le sortir de sa boîte, le réchauffer au four à 220° pendant 4 à 5 minutes et le servir avec ou sans nappage.

Selon une autre particularité, la garniture alimentaire est une glace ou un sorbet.

Selon une autre particularité, la garniture alimentaire est un fruit cuit entier ou confit ou en compote.

Selon une autre particularité, la garniture alimentaire est une crème, une ganache, une mousse de foie, une mousse glacée, une mousse de saumon, du caviar ou du fromage.

Selon une autre particularité, le dessert est frit pendant 30 secondes à 180°C dans de l'huile, puis à nouveau surgelé, mis en boîte et enfin congelé.

Un autre but de l'invention est de proposer un procédé d'utilisation d'un tel produit.

Ce but est atteint par le fait que le produit est sorti de l'emballage puis est mis à frire pendant 30 secondes à 180°C dans de l'huile d'arachide, puis servi accompagné d'un nappage.

Selon une autre particularité, le nappage est au chocolat chaud, ou au caramel, ou au coulis de fruits, ou flambé.

Selon une autre particularité, le produit, qui a été frit avant sa mise en boîte, est sorti de sa boîte puis réchauffé au four à 220° pendant 4 à 5 minutes.

Un autre but de l'invention est de proposer un procédé de fabrication d'un tel produit.

Ce but est atteint par le fait que le procédé comporte :
- une étape de fabrication de demi-coquilles creuses de pâte cuite,
- une étape de remplissage de la partie creuse d'une demi-coquille par la garniture souhaitée,
- une étape de mise en place d'une demi-coquille creuse sur une demi-coquille remplie de garniture,
- une étape de passage à l'anglaise de la coquille et de recouvrement par une chapelure.

Selon une autre particularité, le procédé de fabrication comporte une étape de passage au surgélateur pendant un temps suffisant au durcissement du dessert.

Selon une autre particularité, une étape de passage à la friture dans une huile d'arachide à 180°C pendant 30 secondes.

Selon une autre particularité, le passage à la friture est suivi d'un passage au surgélateur.

Selon une autre particularité, après l'étape de surgélation, les boules sont disposées dans des emballages puis congelées.

Selon une autre particularité, la pâte cuite est de la brioche ou du pain de mie.

D'autres particularités et avantages de la présente invention apparaîtront plus clairement à la lecture de la description ci-après faite en référence aux dessins annexés dans lesquels :
- la figure 1 représente une vue en coupe d'un produit selon l'invention ;
- la figure 2 représente les différentes étapes de fabrication du produit ;
- la figure 3 représente une vue en coupe d'un moule de fabrication des enveloppes en pâte.

L'invention est constituée d'un produit alimentaire constituant, par exemple, un dessert comportant une boule de glace du parfum souhaité (2), disposée à l'intérieur d'une coquille de forme quelconque en pâte (5), telle que, par exemple, de la brioche ou du pain de mie. Cette coquille en pâte (5) est de la même forme que la forme de la glace qui entoure entièrement celle-ci. L'ensemble est passé à l'anglaise, c'est-à-dire dans de l'oeuf battu avec éventuellement un peu de lait, du parfum pour aromatiser et un peu de sucre. En règle générale, on met de l'ordre de 40 grammes de sucre pour un oeuf, puis une fois le dessert passé dans le liquide ainsi obtenu, celui-ci est roulé dans de la chapelure, mis au surgélateur à - 25 à - 30° pendant quelques minutes pour constituer un enrobage (6), puis passé éventuellement dans une friteuse à 180° pendant un temps court de l'ordre de 30 secondes.

L'enrobage (6) et une partie de la coquille (5) sont ainsi devenus croustillants. En sortie de friture, les desserts sont à nouveau mis dans un surgélateur, puis dans des boîtes d'emballage et congelés.

Dans une variante, on peut directement, après sortie du surgélateur, mettre le dessert directement en boîte et avant passage à la friture, le congeler. Dans cette deuxième variante lors de l'utilisation, le consommateur passera les boules sortant de l'emballage directement dans de l'huile de friture, par exemple, de l'arachide à 180°C pendant 30 secondes.

Lorsque les boules ont déjà été passées lors de la fabrication à la friture, l'utilisateur se contente de les réchauffer légèrement dans un four à 220° pendant 4 à 5 minutes, puis de servir celles-ci accompagnées ou non d'un nappage, par exemple, au chocolat chaud, ou au caramel, ou avec un coulis de fruits, ou encore arrosée d'alcool pour les flamber.

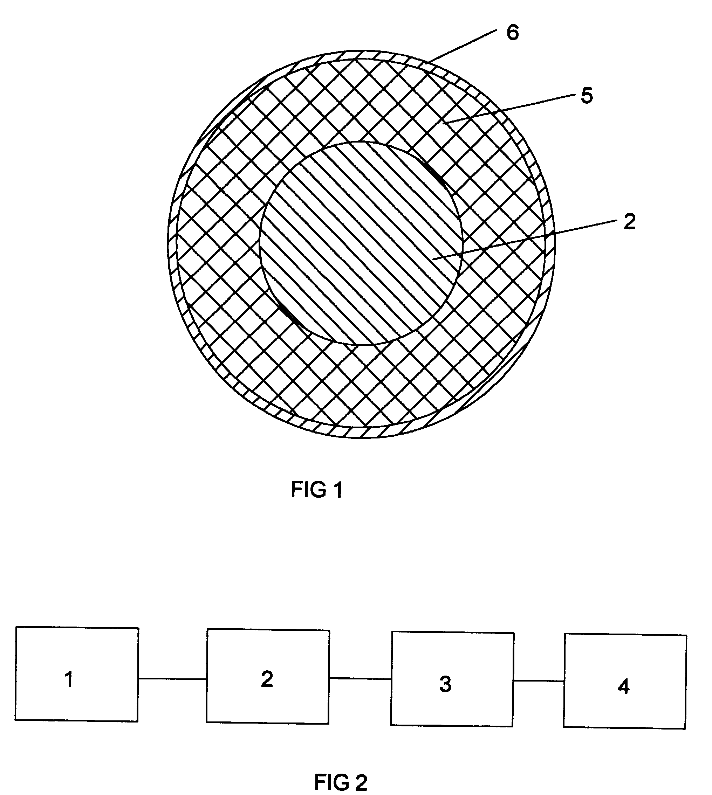

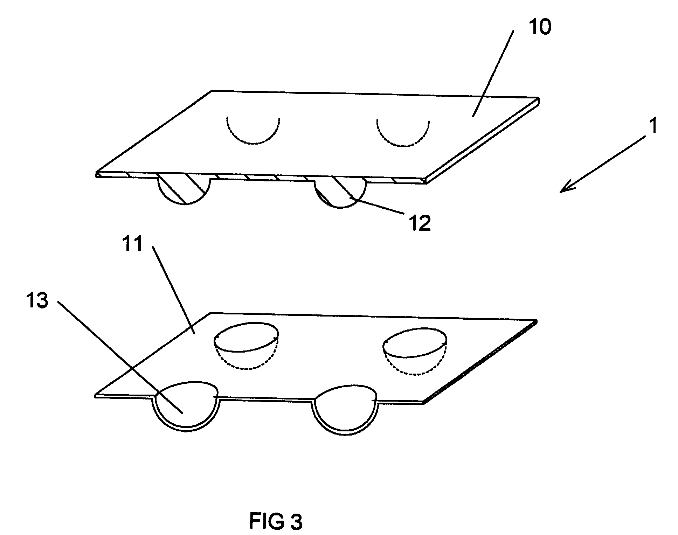

La figure 2 représente le procédé de fabrication, dans lequel, lors de la première étape , on fabrique à l'aide du moule représenté à la figure 3 des boules creuses de pain brioché, ou de pain de mie, ou encore de brioche. De la pâte est disposée dans les alvéoles semi-sphériques (13) du moule (1), puis un couvercle (10), comportant également des demi-sphères (12) en saillie mais de dimension et de rayon inférieurs au rayon des demi-sphères (13), est posé sur ces boules creuses. L'ensemble est chauffé à la température et pendant le temps nécessaire à la cuisson de la pâte. Les demi-coquilles de pâte creuses sont ensuite démoulées. A l'étape 2, les demi-coquilles sont remplies de glace, chaque demi-coquille remplie de glace étant recouverte par une demi-coquille vide de façon à fermer le volume. Lors de l'étape 3, l'ensemble est passé dans un mélange d'oeufs battus avec du lait, de sucre aromatisé puis dans la chapelure. Enfin à l'étape 4, le tout est passé au surgélateur.

Selon les utilisations envisagées par la suite, pour le secteur industriel et la restauration, à la sortie du surgélateur, le dessert ainsi obtenu est mis indirectement dans les emballages. Par contre, pour les consommateurs privés, il est prévu d'effectuer un passage dans la friture à 180°C pendant 30 secondes, puis à nouveau un passage en surgélateur avant mise en emballage et au congélateur. Ceci permet à l'utilisateur de pouvoir réchauffer le dessert au four pendant 4 à 5 minutes à 220°C avant sa consommation.

On comprend que l'invention permet ainsi d'obtenir un dessert chaud-froid, facile à préparer et agréable à consommer, surtout par son aspect croquant et croustillant. La boule de glace peut également être remplacée par un sorbet, une crème, une mousse, par exemple, au chocolat, une ganache, une compote de fruits, un fruit cuit ou confit.

Dans une variante salée, la garniture fourrée par la glace peut être remplacée par de la mousse de foie, de la mousse de saumon, du caviar, des fromages, etc,.

D'autres modifications à la portée de l'homme de métier font également partie de l'esprit de l'invention.

## Revendications

1. Produit alimentaire caractérisé en ce qu'il est constitué d'une boule de garniture enrobée d'une pâte cuite, l'ensemble étant passé à l'anglaise puis dans une chapelure avant d'être mis dans un surgélateur.

2. Produit alimentaire selon la revendication 1, caractérisé en ce que la pâte cuite est de type brioche ou pain de mie.

3. Produit alimentaire caractérisé en ce qu'il est constitué d'une boule de garniture enrobée d'une pâte cuite, l'ensemble étant passé à l'anglaise, puis dans une chapelure avant d'être mis dans un surgélateur, le dessert sorti de l'emballage, est mis à frire pendant 30 secondes à 180° dans de l'huile d'arachide et servi accompagné d'un nappage.

4. Produit alimentaire caractérisé en ce qu'il est constitué d'une boule de garniture enrobée d'une pâte cuite, étant passé à l'anglaise puis dans une chapelure, frit pendant 30 secondes à 180° dans de l'huile, surgelé, mis en boîte et congelé pour, lors de son utilisation, le sortir de sa boîte, le réchauffer au four à 220° pendant 4 à 5 minutes et le servir avec ou sans nappage.

5. Produit alimentaire selon la revendication 1 à 4, caractérisé en ce que la garniture alimentaire est une glace ou un sorbet.

6. Produit alimentaire selon la revendication 1 à 4, caractérisé en ce que la gamiture alimentaire est une compote ou un fruit cuit entier ou confit.

7. Produit alimentaire selon la revendication 1à 4, caractérisé en ce que la garniture alimentaire est une crème, une ganache, une mousse glacée, une mousse de foie, une mousse de saumon, du caviar ou du fromage.

8. Produit alimentaire selon une des revendications 1 à7, caractérisé en ce qu'il est frit pendant 30 secondes à 180°C dans de l'huile, puis à nouveau surgelé, mis en boîte et enfin congelé.

9. Procédé d'utilisation d'un tel produit selon une des revendications 1 à 7, caractérisé en ce que le dessert est sorti de l'emballage puis est mis à frire pendant 30 secondes à 180° dans de l'huile d'arachide, puis servi accompagné d'un nappage.

10. Procédé d'utilisation d'un tel produit selon la revendication 9, caractérisé en ce que le nappage est au chocolat chaud, ou au caramel, ou au coulis de fruits, ou flambé.

11. Procédé d'utilisation d'un tel produit selon la revendication 10, caractérisé en que le produit, qui a été frit avant sa mise en boîte, est sorti de sa boîte puis réchauffé au four à 220°C pendant 4 à 5 minutes.

12. Procédé de fabrication d'un tel produit selon une des revendications 1 à 6, caractérisé en ce qu'il comporte :
- une étape de fabrication de demi-coquilles creuses de pâte cuite,
- une étape de remplissage de la partie creuse d'une demi-coquille par la garniture souhaitée,
- une étape de mise en place d'une demi-coquille creuse sur une demi-coquille remplie de garniture,
- une étape de passage à l'anglaise de la coquille et de recouvrement par une chapelure.

13. Procédé de fabrication d'un tel produit selon la revendication 12, caractérisé en ce qu'il comporte une étape de passage au surgélateur pendant un temps suffisant au durcissement du produit.

14. Procédé de fabrication d'un tel produit selon la revendication 12, caractérisé en ce qu'il comporte une étape de passage à la friture dans une huile de friture à 180°C pendant 30 secondes.

15. Procédé de fabrication d'un tel produit selon la revendication 14, caractérisé en ce que le passage à la friture est suivi d'un passage au surgélateur.

16. Procédé de fabrication d'un dessert selon la revendication 13 ou 15, caractérisé en ce que, après l'étape de surgélation, les boules sont disposées dans des emballages puis congelées.

17. Procédé de fabrication d'un dessert selon la revendication 12 ou 16, caractérisé en ce que la pâte cuite est de la brioche ou du pain de mie.
